# EUROPÄISCHE PATENTANMELDUNG

(11) **EP 1 388 806 A1**
(43) Veröffentlichungstag der Anmeldung: **11.02.2004**
(21) Anmeldenummer: 02016993.4
(22) Anmeldetag: 05.08.2002
(51) Int. Cl.: G06K 15/10, G06K 15/02

(54) **Digitales Druckverfahren mit Tintenmengenbegrenzung**

(71) Anmelder: GRETAG IMAGING Trading AG, 5430 Wettingen (CH)
(72) Erfinder: Kündig, Armin, 8046 Zürich (CH); Kohlbrenner, Adrian Dr., 88 Thalwill (CH)
(74) Vertreter: Schwabe - Sandmair - Marx

(57) **Zusammenfassung**

Digitale Bilddaten werden mittels eines Mehrfarben-Tintenstrahldruckers in photographischer Qualität auf ein Substrat gedruckt. Die zu druckenden digitalen Bilddaten liegen in einem Ausgangsfarbraum vor und werden mittels eines Farbprofils in den Druckerfarbraum des zur Verwendung gelangenden Druckers transformiert. Danach werden sie diversen druckerspezifischen Korrekturen (Punktzunahmekompensation, Linearisierung) unterworfen und schliesslich durch Rasterung in ein zur Ansteuerung des Druckers geeignetes Druckmuster umgerechnet. Die Gesamtmenge der pro Flächeneinheit auf das Substrat applizierten Farbtinten wird auf den zulässigen Maximalwert begrenzt, wobei diese Begrenzung der Gesamttintenmenge auf der Ebene der Transformation der digitalen Bilddaten vom Ausgangsfarbraum in den Druckerfarbraum mittels eines speziellen tintenlastkompensierten Farbprofils durchgeführt wird. Dadurch ist für die Tintenmengenbegrenzung kein zusätzlicher on-line Rechenaufwand erforderlich und kann die Tintenmengenbegrenzung in solcher Weise erfolgen, dass keine unnötigen Einbussen in der Druckqualität entstehen.

## Beschreibung

Die Erfindung betrifft ein Verfahren zum Drucken einer in Form von digitalen Bilddaten vorliegenden Bildinformation mittels eines Mehrfarben-Tintenstrahldruckers auf ein Substrat gemäss dem Oberbegriff des unabhängigen Anspruchs 1. Die Erfindung betrifft auch ein Verfahren zur Begrenzung der applizierten Tintenmenge beim digitalen Mehrfarbendruck gemäss dem Oberbegriff des unabhängigen Anspruchs 2.

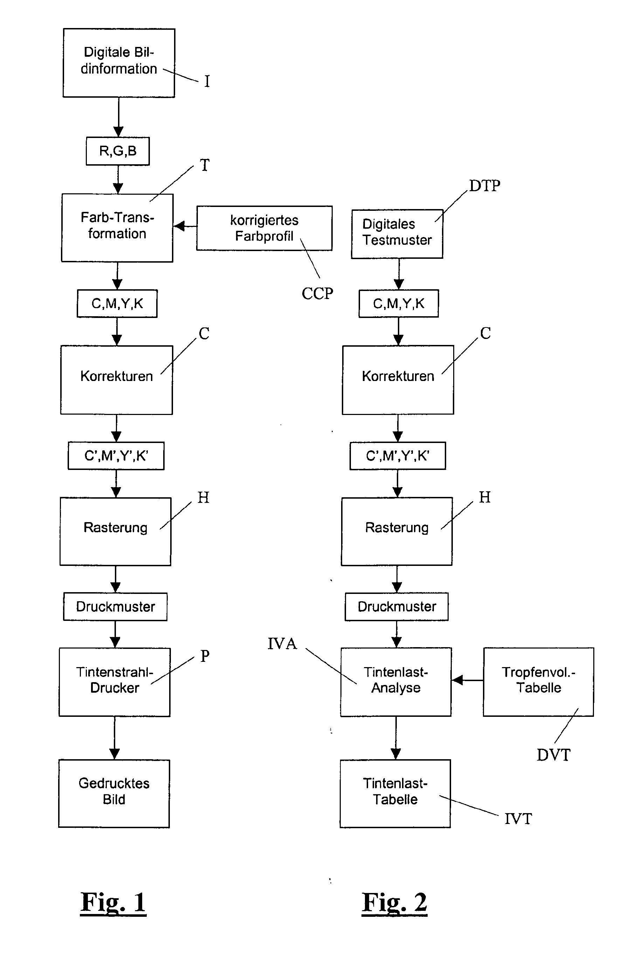

Für den digitalen Druck mit photographischer Bildqualität werden oft Tintenstrahldrucker eingesetzt. Die digitalen Bilddaten liegen in einem Ausgangsfarbraum vor, üblicherweise als RGB Daten mit 8 bit Farbtiefe pro Kanal. Die typischen Tintenstrahldrucker arbeiten mit einer limitierten Anzahl von druckbaren Farbstufen (z. B. 3 Cyan, 3 Cyan light, 3 Magenta, 3 Magenta light, 3 Gelb, 3 Schwarz). Da die digitalen Bilddaten üblicherweise nicht im Druckfarbraum vorliegen, müssen sie in einem relativ aufwändigen Verfahren, das in der Regel aus mehreren Verarbeitungsschritten besteht, in den Farbraum des Druckers (typischerweise 8-bit CMYK) umgerechnet werden. Die meisten bekannten Systeme verwenden dazu eine Vorgehensweise ähnlich wie in Figur 1 gezeigt. Die Abbildung (Transformation) des Ausgangsfarbraums auf den Druckerfarbraum wird üblicherweise in einem sogenannten Farbprofil (z.B. einem ICC Profil) beschrieben, das auf den zur Verwendung gelangenden Drucker, die eingesetzten Drucktinten und das zur Verwendung gelangende Substrat (Medium) abgestimmt ist. Dieses Farbprofil kann als Nachschlagetabelle ("Look-up Table", im folgenden abgekürzt LUT) ausgebildet sein, kann aber auch durch ein Modell beschrieben werden. Nähere Angaben dazu findet man beispielsweise in "Digital Color Management: Encoding Solutions" von Edward J. Giorgianni und Thomas E. Madden, Addison-Wesley (ISBN: 0-201-63426-0).

Aus Rechenzeitgründen wird oft so vorgegangen, dass aus dem Farbprofil eine hochaufgelöste Farbprofil-LUT offline, d.h. vor der eigentlichen Bilddatenverarbeitung, erzeugt wird. Die Erzeugung des Farbprofils bzw. der zugehörigen LUT erfolgt nach den üblichen Methoden unter Verwendung eines Farbmessgeräts und einer geeigneten Software, z.B. dem "Profile Maker" der Firma Gretag-Macbeth AG, Regensdorf, Schweiz. Die eigentliche Farbtransformation (Color Conversion) der Bilddaten, d.h. das Überführen der Bilddaten vom Ausgangsfarbraum in den Druckerfarbraum, wird typischerweise so realisiert, dass für die zu berechnenden Bilddaten in der Farbprofil-LUT der entsprechende Wert nachgeschlagen wird. Ist kein entsprechender Eintrag vorhanden, wird der Ausgangswert durch Interpolation geeigneter Ausgangswerte gebildet. Anschliessend an die Farbumwandlung wird oft eine druckerspezifische Linearisation und/oder Punktzuwachskompensation gemacht. (Diese Korrekturschritte sind in einigen bekannten Anwendungen direkt in die Farbprofil-LUT integriert.). Die so berechneten Farbauszüge werden nun in einem nächsten Schritt durch Rasterung (Halftoning) in ein durch den Drucker reproduzierbares Druckmuster (Tintenbelegung und ggf. Tröpfchengrösse pro Bildpunkt) umgerechnet, mit welchem der eingesetzte Drucker angesteuert wird.

Tintenstrahldrucker mit photographischer Bildqualität drucken in hoher Auflösung auf unterschiedlichste Medien. Die meisten Medien können nur eine limitierte Tintenmenge pro Flächeneinheit aufnehmen. Bei der heute gebräuchlichen hohen Druckauflösung wird ohne Gegenmassnahmen die maximale Tintenlast (Tintenmenge pro Flächeneinheit) eines Mediums häufig überschritten. Diese Problematik wird durch die Verwendung von verdünnten Tinten noch verschärft. Die Ueberschreitung der maximal zulässigen Tintenlast führt zu Artefakten im Druckbild (z. B. "color bleed", "coalescence") und es dauert länger, bis der Druck trocken ist.

Zur Lösung dieser Problematik sind verschiedene Ansätze bekannt. Einige, z.B. die aus US-A 5,515,479 und US-A 5,799,136 bekannten Ansätze, haben aber den Nachteil, dass sie zusätzliche Schritte in der Datenverabeitung benötigen und dadurch zu einer wesentlichen Erhöhung des on-line Rechenenaufwandes in der Bildverarbeitung führen.

Eine andere bekannte Lösung dieser Problematik (z.B. US-A 6,344,903) führt zwar nicht zu einem erhöhten Rechenaufwand, hat aber den anderen Nachteil, dass Tintenlimitierungen nur für reine Farben oder für Farbstufen gemacht werden können. Damit es bei keiner aller möglicher Farbkombinationen zu einer Ueberschreitung der maximalen Tintenmenge kommt und da diese Limitierungen nur global (unabhängig von der Farbmischung) gesetzt werden können, müssen diese sehr restriktiv gehandhabt werden. Dies hat zur Folge, dass bei weniger kritischen Farbkombinationen diese globalen Tintenlimitierungen zu restriktiv sind und daher den verfügbaren Farbraum unnötig einschränken und dadurch Qualitätseinbussen im Druckbild hingenommen werden müssen.

Weitere Ansätze, das Problem der Tintenmengenlimitierung in den Griff zu bekommen, sind z.B. in den Dokumenten US-A 5,633,662, US-A 5,563,985, US-A 6,233,061, US-A 5,592,592 US-A 5,625,755 und US-A 5,684,932 beschrieben. Diese Lösungsansätze leiden jedoch unter genau denselben Nachteilen wie die vorstehend beschriebenen Ansätze, d.h. sie erfordern entweder einen verhältnismässig hohen zusätzlichen on-line Rechenaufwand bei der Verarbeitung der Bilddaten oder sie führen zu einer Einschränkung des druckbaren Farbraums und damit zu einem Verlust an Druckqualität.

Durch die vorliegende Erfindung sollen diese Schwierigkeiten überwunden und eine Tintenmengenbegrenzung realisiert werden, die einerseits ohne erhöhten on-line Rechenaufwand bei der Bilddatenverarbeitung auskommt und anderseits zu keinen vermeidbaren Einbussen in der Qualität des Druckergebnisses führt.

Die Lösung dieser der Erfindung zugrundeliegenden Aufgabe ergibt sich aus den im kennzeichnenden Teil der unabhängigen Ansprüche beschriebenen Merkmalen. Besonders vorteilhafte Ausgestaltungen und Weiterbildungen sind Gegenstand der abhängigen Ansprüche

Gemäss dem grundlegendsten Gedanken der Erfindung wird also die Tintenmengenlimitierung in die Farbtransformation vom Ausgangsfarbraum in den Druckerfarbraum eingebaut, indem ein gegenüber dem herkömmlichen Farbprofil tintenlastkorrigiertes Farbprofil verwendet wird, also ein speziell modifiziertes Farbprofil, das die Tintenlimitierung bereits in sich enthält. Das Farbprofil ist dabei so ausgebildet, dass für keine der möglichen druckbaren Farbkombinationen die maximal zulässige Tintenbelastung überschritten wird. Die erfindungsgemässe Integration der Tintenlimitierung in die Transformation der digitalen Bilddaten vom Ausgangsfarbraum in den Druckerfarbraum bzw. in das Farbprofil hat den Vorteil, dass für die Tintenlimitierung kein zusätzlicher on-line Rechenaufwand bei der Bilddatenverarbeitung verursacht wird. Ein weiterer wichtiger Vorteil des erfindungsgemässen Verfahrens besteht darin, dass für alle möglichen Farbkombinationen nur die jeweils tatsächlich benötigte Tintenlimierung angewendet werden kann und dadurch trotz Tintenlimitierung der maximal mögliche Farbraum erhalten bleibt.

Ein zusätzlicher Vorteil des erfindungsgemässen Verfahrens liegt darin, dass neben den üblichen globalen (den gesamten Farbraum abdeckenden) Unterfarbenreduzierungen (under color removal: UCR) und dem globalen Unbuntaufbau (gray component replacement: GCR) noch zusätzlich ein lokal abhängiges (nur ausgewählte Bereiche des Farbraums betreffendes) UCR/GCR realisierbar ist. Zu UCR und GCR vergleiche "Video demystified: A handbook for the digital engineer" von Keith Jack, Brooktree Corporation (ISBN 1-878707-09-4).

Im folgenden wird die Erfindung anhand der Zeichnung näher erläutert. Es zeigen:
- Fig. 1: eine schematische Darstellung eines Ausführungsbeispiels des erfindungsgemässen Verfahrens,
- Fig. 2: eine schematische Darstellung der Ermittlung einer Tintenlast-Tabelle und
- Fig. 3: eine schematische Darstellung der Ermittlung des erfindungsgemäss verwendeten tintenlastkorrigierten Farbprofils.

Das erfindungsgemässe Verfahren wird hier anhand eines typischen Ausführungsbeispiels beschrieben, bei dem von 8-bit RGB codierten digitalen Bilddaten ausgegangen und ein Tintenstrahl-Drucker mit C,M,Y,K-Tintensystem und 8 bit Farbtiefe (pro Farbkanal) verwendet wird. Das erfindungsgemässe Verfahren lässt sich aber ohne weiteres sinngemäss auch für andere Ausgangsfarbräume und für Drucker mit anderen Tintensystemen (z. B. C,M,Y,K,O,G) oder für andere Farbtiefen (z. B. 16 bit) anwenden.

Wie die Fig. 1 zeigt, verläuft das erfindungsgemässe Druckverfahren bzw. die Verarbeitung der Bilddaten zu einem für die Ansteuerung des Druckers geeigneten Druckmuster gleich wie beim schon eingangs detailliert beschriebenen herkömmlichen digitalen Mehrfarbendruck.

Die zu druckende Bildinformation I liegt in Form von digitalen Bilddaten vor, welche üblicherweise 8-bit RGB codiert sind. Der Farbraum dieser digitalen Bilddaten wird als Ausgangsfarbraum bezeichnet. Die digitalen Bilddaten werden in einer Transformationsstufe T in den spezifischen Farbraum des zur Verwendung gelangenden Tintenstrahldruckers P umgerechnet (hier im Beispiel C,M,Y,K). Die Umrechnung erfolgt in an sich bekannter Weise mittels eines Farbprofils, das die spezifischen Eigenschaften des Druckers in Verbindung mit dem zu bedruckenden Substrat beschreibt. Die in den Druckerfarbraum transformierten Bilddaten werden anschliessend in einer Korrekturstufe C gewissen druckerspezifischen Korrekturen unterworfen, zu denen üblicherweise eine Kompensation des sogenannten Punktzuwachses und/oder eine Linearisierung des Zusammenhangs zwischen den Farbwerten und den resultierenden optischen Dichten im Druckbild gehören. Diese Korrekturen sind an sich bekannt und bedürfen keiner näheren Erläuterung. Die so korrigierten Bilddaten werden anschliessend in einer Rasterungsstufe H in ebenfalls an sich bekannter und üblicher Weise gerastert, d.h. in ein Druckmuster umgerechnet, das unmittelbar geeignet ist, Befehle zur Ansteuerung des Tintenstrahldruckers P zu erzeugen. Im wesentlichen enthalten diese Druckerbefehle für jeden Bildpunkt im Druckbild die Information, mit welcher Farbtinte und, sofern der eingesetzte Drucker dies erlaubt, mit welcher Tröpfchengrösse der Bildpunkt beaufschlagt werden soll. Die Ansteuerung des Druckers aufgrund des Druckmusters erfolgt in der üblichen, dem Fachmann geläufigen Weise.

Soweit entspricht das erfindungsgemässe Verfahren, wie schon gesagt, voll und ganz dem Stand der Technik, so dass der Fachmann keiner weiteren Erläuterungen bedarf. Im folgenden wird daher nur noch auf die spezifischen Eigenheiten des erfindungsgemässen Verfahrens eingegangen.

Der wesentlichste Unterschied des erfindungsgemässen Verfahrens zum Stand der Technik besteht darin, dass in die Transformation T der digitalen Bilddaten in den Druckerfarbraum eine neuartige Begrenzung der pro Flächeneinheit auf das Substrat applizierten Gesamttintenmenge eingebaut ist. Realisiert wird diese zusätzliche Funktion durch Verwendung eines speziellen tintenlastkorrigierten Farbprofils CCP in der Transformationsstufe T. Dieses tintenlastkorrigierte Farbprofil CCP ist so ausgelegt, dass bei keiner druckbaren Farbkombination eine Überschreitung der pro Flächeneinheit des Substrats maximal zulässigen Gesamttintenmenge (im statistischen Mittel pro relevanter Flächeneinheit) ergibt. Die Erfindung läuft also darauf hinaus, anstelle eines herkömmlichen Farbprofils dieses spezielle tintenlastkorrigierte Farbprofil CCP zu verwenden. Damit sind für die on-line Bilddatenverarbeitung genau dieselben Rechenschritte erforderlich wie für das herkömmliche Druckverfahren ohne Tintenmengenbegrenzung, oder in anderen Worten, für die Begrenzung der Tintenmenge fällt kein zusätzlicher on-line Rechenaufwand an.

Das tintenlastkorrigierte Farbprofil CCP ist vorzugsweise (wie an sich üblich) als hochaufgelöste Nachschlagtabelle (Look-up table, "LUT") realisiert, wobei jeder RGB-Wertekombination (Farbort) des Ausgangsfarbraums eine entsprechende CMYK-Wertekombination (Farbort) des Druckerfarbraums zugeordnet ist. Die Transformation der Bilddaten besteht also lediglich im Ersatz der RGB-Werte durch die zugeordneten CMYK-Werte (oder, falls diese in der LUT nicht vorhanden sind, durch Interpolation aus geeigneten Ausgangswerten).

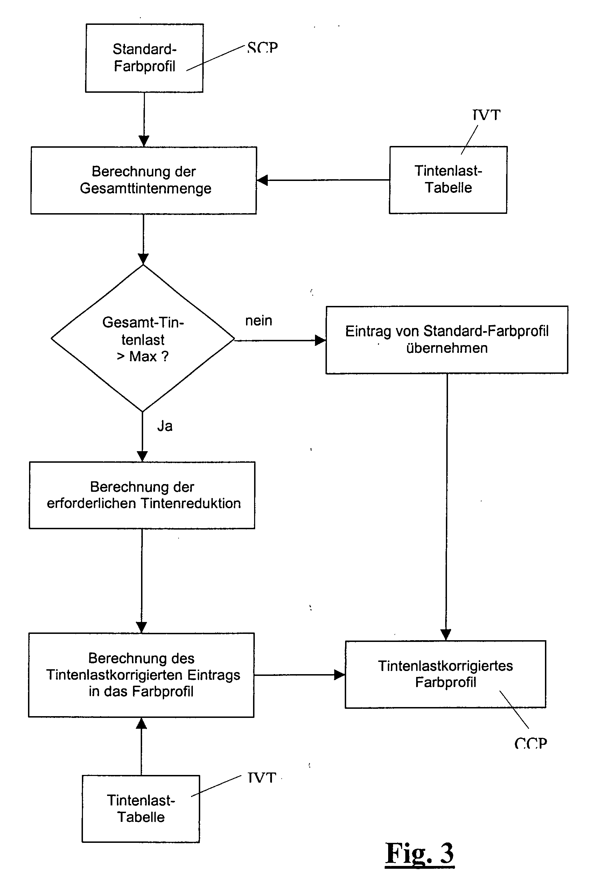

Wie auch beim herkömmlichen Druckverfahren ohne Tintenmengenbegrenzung muss das Farbprofil vor dem Druck off-line für den jeweils eingesetzten Tintenstrahldrukker, die verwendeten Farbtinten und das verwendete Substrat (Medium) erstellt werden. Die Erstellung eines (herkömmlichen) Farbprofils ist an sich bekannt und kann beispielsweise mittels der schon eingangs erwähnten Software "ProfileMaker" und den dazu benötigten farbmetrischen Gerätschaften erfolgen. Für die Erstellung eines tintenlastkorrigierten Farbprofils CCP, wie es für die vorliegende Erfindung erforderlich ist, wird davon ausgegangen, dass bereits ein herkömmliches Farbprofil in Form einer (vorzugsweise hochaufgelösten) Nachschlagtabelle vorliegt, das im folgenden als Standard-Farbprofil SCP bezeichnet wird. Das tintenlastkorrigierte Farbprofil CCP wird aus dem Standard-Farbprofil SCP dadurch gebildet, dass (auf der Seite des Druckerfarbraums) diejenigen (und nur diejenigen) Werte der Nachschlagtabelle, die zu einer Überschreitung der maximal zulässigen Tintenlast im Druckbild führen würden, durch solche Werte ersetzt werden, die zu keiner Überschreitung führen. Wie dies im Detail vor sich geht, wird im folgenden anhand der Figuren 2 und 3 näher erläutert.

Als erstes wird für jeden möglichen C, M, Y, und K Wert die zugehörige Tintenlast in den vier Farbkanälen C,M,Y,K ermittelt und in einer Tintenlasttabelle IVT festgehalten. Dazu wird ein (digitales) Testmuster DTP generiert, das genügend grosse Testfarbflächen mit allen möglichen Abstufungen (jeweils in allen Farbkanälen gleich, also 256 Testfarbflächen mit jeweils gleichen C=M=Y=K Werten) enthält. Insgesamt umfasst die Tintenlasttabelle IVT somit 4*256 Einträge.

Wie aus der Fig. 2 ersichtlich werden dazu die digitalen Bilddaten der Testfarbflächen des Testmusters DTP genau derselben Korrektur C (Punktzuwachskompensation, Linearisierung) unterworfen wie bei der eigentlichen on-line Bilddatenverarbeitung während des Drucks und wird ferner auch genau dieselbe Rasterung H durchgeführt. Nach der Rasterung (Halftoning) ist für jede Testfarbfläche das tatsächliche Druckmuster bekannt, also welche und insbesondere wieviele Bildpunkte mit welchen Farbtinten und mit welchen Tröfchengrössen belegt sind. Aus diesen Druckmustern werden dann in einer Tintenlastanalysestufe IVA mit Hilfe einer Tröpfchenvolumentabelle DVT durch einfaches Aufsummieren und Normieren auf eine Flächeneinheit die resultierenden mittleren Tintenmengen für jede Abstufung der vier Farbkanäle C,M,Y,K berechnet und in die Tintenlasttabelle IVT eingetragen (4*256 Einträge). Die Tröpfchenvolumentabelle DVT ist druckerspezifisch und gibt an, wie gross die Nominal-Volumina der vom Drucker erzeugten Tintentröpfchen (pro Farbtinte) sind. Falls der Drucker nur eine einzige Tröpfchengrösse erzeugen kann, besteht die Tabelle natürlich nur aus einem einzigen Wert (pro Farbtinte). Die Tintenlasttabelle IVT ordnet also Eingangswerten auf einem Farbkanal im Mittel zu erwartende Tintenmengen pro Flächeneinheit zu. Die (im Mittel) tatsächlich auf dem Substrat pro Flächeneinheit deponierte Gesamttintenmenge oder Gesamttintenlast für einen beliebigen Farbort im Druckerfarbraum ergibt sich dann ganz einfach durch Addition der zugehörigen vier Einträge in der Tintenlasttabelle IVT.

Die Anzahl der Testfarbflächen des Testmusters kann in geeignerter Weise reduziert werden. Dadurch wird die benötigte Rechenzeit reduziert, jedoch müssen dann die fehlenden Einträge in der Tintenlasttabelle interpoliert werden. Dies hat gerade bei modernen Multileveldruckern mit hochgradig nichtlinearem Verhalten eine Genauigkeitseinbusse zur Folge.

Anhand der so ermittelten Tintenlasttabelle IVT kann nun die Korrektur des Standard-Farbprofils SCP erfolgen, um daraus das tintenlastkorrigierte Farbprofil CCP zu bilden. Die dazu erforderlichen Berechnungsschritte sind in Fig. 3 schematisch dargestellt. Diese Berechnungsschritte werden für jeden Stützpunkt (diskrete RGB-Wertekombination und zugehöriger CYMK-Eintrag) der Nachschlagtabelle des Standard-Farbprofils SCP durchgeführt.

Als erstes wird für den Eintrag (konkrete Wertekombination C,M,Y,K) des Standard-Farbprofils SCP anhand der Tintenlasttabelle IVT die Gesamttintenmenge (pro Flächeneinheit) berechnet. Diese ergibt sich, wie schon gesagt, ganz einfach durch Addition der der Wertekombination C.M,Y,K entsprechenden vier Einträge der Tintenlasttabelle.

Dann wird geprüft, ob die so berechnete Gesamttintenmenge den für das Substrat bekannten zulässigen Maximalwert überschreitet. Wenn dies nicht der Fall ist, wird der Eintrag des Standard-Farbprofils SCP unverändert als Eintrag für das tintenlastkorrigierte Farbprofil CCP übernommen. .

Falls der zulässige Maximalwert überschritten wird, wird die erforderliche Tintenreduktion bestimmt und dann anhand der Tintenlasttabelle IVT ein neuer Eintrag (Wertekombination C,M,Y,K) berechnet, welcher die maximal erlaubte Gesamttintenlast nicht mehr überschreitet. Dieser neue Eintrag wird dann anstelle desjenigen des Standard-Farbprofils SCP als Eintrag in das tintenlastkorrigierte Farbprofil CCP übernommen. Auf diese Weise wird das gesamte tintenlastkorrigierte Farbprofil CCP Eintrag für Eintrag aufgebaut.

Die Neuberechnung des tintenlastkorrigierten Eintrags kann natürlich nach verschiedenen Strategien erfolgen. Im einfachsten Fall kann eine lineare, d.h. in allen vier Farbkanälen gleichmässige Reduktion der Tintenmenge vorgenommen werden, wodurch der Farbton nur minimal verändert wird oder erhalten bleibt. Es kann aber z.B. auch noch eine verstärkte lokale Unterfarbenreduzierung (UCR) oder ein lokaler Unbuntaufbau (GCR) gemacht werden. Gegebenenfalls muss dann die Berechnung der tintenlastkorrigierten Einträge des tintenlastkorrigierten Farbprofils CCP in mehreren Schritten iterativ erfolgen.

Mit dem erfindungsgemässen Vorgehen erfolgt die Tintenlimitierung auf der Ebene der Farbumwandlung. Für die Berechnungen stehen aber trotzdem die Informationen (d. h. die Eigenschaften) der darauffolgenden Verarbeitungsschritte (Halftoning, Punktzunahmekompensation, Linearisation, usw.) zur Verfügung, und diese werden dadurch automatisch in der Tintenlimitierung berücksichtigt. Dies ist vor allem bei modernen Tintenstrahldruckern mit zusätzlichen verdünnten Farbtinten (in der Regel verdünntes Cyan und verdünntes Magenta) wichtig, weil bei Druckern mit verdünnten Farben die Tintenmenge absolut nicht mehr linear bezüglich der C,M,Y,K-Werte ist (im allgemeinen ist sie nicht einmal mehr monoton steigend).

## Patentansprüche

1. Verfahren zum Drucken einer in Form von digitalen Bilddaten vorliegenden Bildinformation (I) mittels eines Mehrfarben-Tintenstrahldruckers (P) auf ein Substrat, wobei die zu druckenden digitalen Bilddaten in einem Ausgangsfarbraum vorliegen und mittels eines Farbprofils in den Druckerfarbraum des zur Verwendung gelangenden Druckers (P) transformiert werden, ggf. danach oder dabei diversen druckerspezifischen Korrekturen (C) unterworfen und schliesslich durch Rasterung (H) in ein zur Ansteuerung des Druckers geeignetes Druckmuster umgerechnet werden, und wobei ferner die Gesamtmenge der pro Flächeneinheit auf das Substrat applizierten Farbtinten auf einen Maximalwert begrenzt wird, **dadurch gekennzeichnet, dass** die Begrenzung der Gesamttintenmenge unter Verwendung eines tintenlastkorrigierten Farbprofils (CCP) gleichzeitig mit der Transformation (T) der digitalen Bilddaten vom Ausgangsfarbraum in den Druckerfarbraum durchgeführt wird, wobei das tintenlastkorrigierte Farbprofil (CCP) so ausgelegt ist, dass kein druckbarer Farbton zu einer Überschreitung der für das zu bedruckende Substrat zulässigen maximalen Gesamttintenmenge auf dem Substrat führt.

2. Verfahren zur Begrenzung der auf ein zu bedruckendes Substrat pro Flächeneinheit applizierten Gesamttintenmenge beim digitalen Mehrfarbendruck, wobei die zu druckenden digitalen Bilddaten in einem Ausgangsfarbraum vorliegen und mittels eines Farbprofils in den Druckerfarbraum des zur Verwendung gelangenden Druckers (P) transformiert werden, ggf. danach oder dabei diversen druckerspezifischen Korrekturen (C) unterworfen und schliesslich durch Rasterung (H) in ein zur Ansteuerung des Druckers geeignetes Druckmuster umgerechnet werden, **dadurch gekennzeichnet, dass** die Begrenzung der Gesamttintenmenge unter Verwendung eines tintenlastkorrigierten Farbprofils (CCP) gleichzeitig mit der Transformation (T) der digitalen Bilddaten vom Ausgangsfarbraum in den Druckerfarbraum durchgeführt wird, wobei das tintenlastkorrigierte Farbprofil (CCP) so ausgelegt ist, dass kein druckbarer Farbton zu einer Überschreitung der für das zu bedruckende Substrat zulässigen maximalen Gesamttintenmenge auf dem Substrat führt.

3. Verfahren nach Anspruch 1 oder 2, **dadurch gekennzeichnet, dass** das tintenlastkorrigierte Farbprofil (CCP) in Form einer Nachschlagetabelle realisiert wird.

4. Verfahren nach Anspruch 3, **dadurch gekennzeichnet, dass** das tintenlastkorrigierte Farbprofil (CCP) vor dem Drucken aus einem druckerspezifischen Standard-Farbprofil (SCP) berechnet wird, indem diejenigen Einträge des Standard-Farbprofils, welche zu einer Überschreitung der höchstzulässigen Gesamttintenmenge auf dem Substrat führen, durch tintenlastkorrigierte Einträge ersetzt werden, welche zu keiner Überschreitung der höchstzulässigen Gesamttintenmenge führen.

5. Verfahren nach Anspruch 4, **dadurch gekennzeichnet, dass** vor dem Drucken eine Tintenlasttabelle (IVT) berechnet wird, welche Eingangswerten in jedem Farbkanal des Druckerfarbraums auf dem Substrat im Mittel zu erwartende Tintenmengen pro Flächeneinheit zuordnet, und dass die Berechnung der tintenlastkorrigierten Einträge des tintenlastkorrigierten Farbprofils (CCP) anhand der Tintenlasttabelle (IVT) erfolgt.

6. Verfahren nach Anspruch 5, **dadurch gekennzeichnet, dass** in die Berechnung der Tintenlasttabelle (IVT) dieselben Korrekturschritte (C) und Rasterungen (H) einbezogen werden, welche auch im eigentlichen Druckvorgang durchgeführt werden.
